# EUROPEAN PATENT APPLICATION

(11) **EP 4 823 189 A1**
(43) Date of publication of application: **14.10.2026**
(21) Application number: 24920951.1
(22) Date of filing: 01.02.2024
(51) Int. Cl.: H04W 52/02

(54) **WIRELESS COMMUNICATION METHOD, TERMINAL DEVICE AND NETWORK DEVICE**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN); XU, Weijie, Dongguan, Guangdong 523860 (CN)
(74) Representative: RGTH
(86) International application number: PCT/CN2024/075219
(87) International publication number: WO 2025/160885

(57) **Abstract**

Provided are a wireless communication method, a terminal device and a network device. The method comprises: a terminal device receiving first information sent by a network device, wherein the first information is configured to schedule first data sent by the terminal device in a random access procedure. In the related art, the terminal device needs to complete the random access procedure and establish an RRC connection with a network before the terminal device can perform data transmission. Therefore, a data transmission procedure in the related art is relatively complex. In the present application, on the basis of first information, the network device can schedule the terminal device to send data in the random access procedure, thereby simplifying a data sending process, and consequently reducing energy consumption.

## Description

### TECHNICAL FIELD

The present disclosure relates to the technical field of communications, and more specifically, to a wireless communication method, a terminal device, and a network device.

### BACKGROUND

With the development of technology, a terminal device has increasingly high requirements for power saving. For example, since the power harvesting efficiency and storage capacity of an ambient power enabled (AMP) terminal device are limited, it is necessary to reduce the power consumption of the AMP terminal device as much as possible.

### SUMMARY

The present disclosure provides a wireless communication method, a terminal device, and a network device. Various aspects involved in the present disclosure are introduced below.

In first aspect, there is provided a wireless communication method, which includes: receiving, by a terminal device, first information sent by a network device, where the first information is used to schedule first data to be sent by the terminal device during a random access procedure.

In a second aspect, there is provided a wireless communication method, which includes: sending, by a network device, first information to a terminal device, where the first information is used to schedule first data to be sent by the terminal device during a random access procedure.

In a third aspect, there is provided a terminal device, which includes: a receiving unit, configured to receive first information sent by a network device, where the first information is used to schedule first data to be sent by the terminal device during a random access procedure.

In a fourth aspect, there is provided a network device, which includes: a sending unit, configured to send first information to a terminal device, where the first information is used to schedule first data to be sent by the terminal device during a random access procedure.

In a fifth aspect, there is provided a terminal device, which includes: a processor, and a memory. The memory is configured to store one or more computer programs, and the processor is configured to invoke the computer program(s) in the memory, to enable the terminal device to perform some or all of operations in the method of the first aspect.

In a sixth aspect, there is provided a network device, which includes: a processor, a memory, and a transceiver. The memory is configured to store one or more computer programs, and the processor is configured to invoke the computer program(s) in the memory, to enable the network device to perform some or all of operations in the method of the second aspect.

In a seventh aspect, an embodiment of the present disclosure provides a communication system, which includes the aforementioned terminal device and/or network device. In another possible design, the system may also include other devices that interact with the terminal device or network device in the solutions provided by the embodiments of the present disclosure.

In an eighth aspect, an embodiment of the present disclosure provides a computer-readable storage medium. The computer-readable storage medium stores a computer program that enables a terminal device and/or a network device to perform some or all of operations in the methods of the above aspects.

In a ninth aspect, an embodiment of the present disclosure provides a computer program product. The computer program product includes a non-transitory computer-readable storage medium that stores a computer program, where the computer program is operable to enable a terminal device and/or a network device to perform some or all of operations in the methods of the above aspects. In some implementations, the computer program product may be a software installation package.

In a tenth aspect, an embodiment of the present disclosure provides a chip. The chip includes a memory and a processor. The processor can invoke a computer program from the memory and run the computer program to implement some or all of operations described in the methods of the above aspects.

In the related art, a terminal device needs to complete a random access procedure to establish a radio resource control (RRC) connection with a network before data transmission can be performed. Therefore, the data transmission process in the related art is relatively complex and the power consumption is relatively high. In the present disclosure, based on the first information, the network device can schedule the terminal device to send data during the random access procedure, thereby simplifying the data sending process and further reducing the power consumption. Through the first information, the network device can reasonably and efficiently schedule the uplink transmission of the terminal device during the random access procedure, thereby reducing collisions and improving the success rate of uplink transmission.

### BRIEF DESCRIPTION OF DRAWINGS

FIG. 1 is a schematic diagram of a wireless communication system applied to an embodiment of the present disclosure.
FIG. 2 is an exemplary diagram illustrating a random access procedure.
FIG. 3 is a schematic flowchart of a wireless communication method provided by an embodiment of the present disclosure.
FIG. 4 is a schematic diagram of a first resource pool provided by an embodiment of the present disclosure.
FIG. 5 is a schematic diagram of a second resource pool provided by an embodiment of the present disclosure.
FIG. 6 is a schematic flowchart of another wireless communication method provided by an embodiment of the present disclosure.
FIG. 7 is a schematic structural diagram of a terminal device provided by an embodiment of the present disclosure.
FIG. 8 is a schematic structural diagram of a network device provided by an embodiment of the present disclosure.
FIG. 9 is a schematic structural diagram of an apparatus for communication provided by an embodiment of the present disclosure.

### DETAILED EMBODIMENTS

The technical solutions in the present disclosure are described below with reference to the drawings.

### Communication System

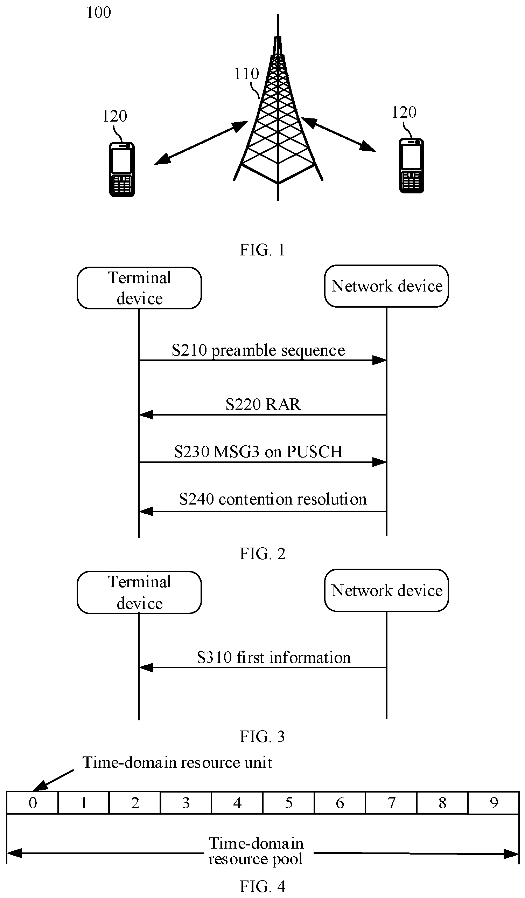

FIG. 1 illustrates a wireless communication system 100 to which embodiments of the present disclosure are applied. The wireless communication system 100 may include a communication device, and the communication device may include a network device 110 and terminal devices 120. The network device 110 may be a device that performs communication with the terminal devices 120.

FIG. 1 exemplarily illustrates one network device and two terminal devices. Optionally, the wireless communication system 100 may include multiple network devices, and the coverage range of each network device may include other numbers of terminal devices, which are not limited in the embodiments of the present disclosure.

Optionally, the wireless communication system 100 may also include other network entities such as a network controller, and a mobility management entity, etc, which are not limited in the embodiments of the present disclosure.

It should be understood that the technical solutions of the embodiments of the present disclosure may be applied to various communication systems, such as: a fifth-generation (5G) system or a new radio (NR), a long-term evolution (LTE) system, an LTE frequency division duplex (FDD) system, and an LTE time division duplex (TDD) system. The technical solutions provided by the present disclosure may also be applied to future communication systems, such as a sixth-generation mobile communication system, and a satellite communication system.

In the embodiments of the present disclosure, the terminal device may also be referred to as user equipment (UE), an access terminal, a user unit, a user station, a mobile site, a mobile station (MS), a mobile terminal (MT), a remote station, a remote terminal, a mobile device, a user terminal, a terminal, a wireless communication device, a user agent or a user apparatus. In the embodiments of the present disclosure, the terminal device may refer to a device that provides voice and/or data connectivity to a user, and may be used to connect people, objects and machines, such as a handheld device or in-vehicle device with a wireless connection function. In the embodiments of the present disclosure, the terminal device may be a mobile phone, a tablet computer (Pad), a laptop computer, a handheld computer, a mobile Internet device (MID), a wearable device, a virtual reality (VR) device, an augmented reality (AR) device, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, etc. Optionally, the UE may be configured to act as a base station. For example, the UE may act as a scheduling entity that provides sidelink signals between UEs in vehicle-to-everything (V2X) or device-to-device (D2D) communication. For example, a cellular phone and a car may communicate with each other by using sidelink signals. A cellular phone and a smart home device may communicate with each other without relaying communication signals via a base station.

The network device in the embodiments of the present disclosure may be a device used for communicating with a terminal device. The network device may also include an access network device. The access network device may provide a communication coverage for a specific geographical area and may perform communication with a terminal device 120 located within that coverage area. The access network device may also be referred to as a radio access network device or a base station, etc. The access network device in the embodiments of the present disclosure may be referred to as a radio access network (RAN) node (or device) that connects a terminal device to a wireless network. The access network device may broadly cover the following various names, or may be replaced with the following names, such as: a NodeB, an evolved NodeB (eNB), a next generation base station (next generation NodeB, gNB), a relay station, an access point (AP), a transmitting and receiving point (TRP), a transmitting point (TP), a master eNB (MeNB), a secondary eNB (SeNB), a multi-standard radio (MSR) node, a home base station, a network controller, an access node, a wireless node, an access point (AP), a transmission node, a transceiver node, a base band unit (BBU), a remote radio unit (RRU), an active antenna unit (AAU), a remote radio head (RRH), a central unit (CU), a distributed unit (DU), and a positioning node. The base station may be a macro base station, a micro base station, a relay node, a donor node, or similar entities, or a combination thereof. The base station may also be referred to as a communication module, a modem or a chip configured to be set in the above-mentioned devices or apparatuses. The base station may also be a mobile switching center; a device that performs functions of the base station in D2D communication, V2X communication and machine-to-machine (M2M) communication; a network-side device in a 6G network; and a device that performs functions of the base station in a future communication system; etc. The base station may support networks with the same or different access technologies. The specific technologies used by the access network device and the specific device forms of the access network device are not limited in the embodiments of the present disclosure.

The base station may be immobile or mobile. For example, a helicopter or a drone may be configured to act as a mobile base station, and one or more cells may move based on the location of the mobile base station. In other examples, the helicopter or the drone may be configured to act as a device communicating with another base station.

Communication devices involved in a wireless communication system may include not only an access network device and a terminal device, but also a core network network element. The core network network element may be implemented by a device, that is, the core network network element is a core network device. It can be understood that the core network device may also be a type of network device.

The core network network element in the embodiments of the present disclosure may include a network element that processes and forwards user signaling and data. For example, the core network device may include core network devices such as a core access and mobility management function (AMF), a session management function (SMF), a user plane gateway, and a location management function (LMF). Among them, the user plane gateway may be a server with functions such as mobility management, routing, and forwarding of user plane data, generally located on the network side, e.g., a serving gateway (SGW), a packet data network gateway (PGW), or a user plane function (UPF) entity. Certainly, other network elements may be included in the core network, which are not listed here.

In some deployments, the network device in the embodiments of the present disclosure may refer to a CU or a DU, or the network device includes a CU and a DU. The gNB may also include an AAU.

The network device and the terminal device may be deployed on land, which includes indoor or outdoor, handheld or in-vehicle; or may also be deployed on water; or may also be deployed on an airplane, a balloon and satellite in the air. The scenarios in which the network device and terminal device are located are not limited in the embodiments of the present disclosure.

It should be understood that all or some of the functions of the communication device in the present disclosure may also be implemented by software functions running on hardware, or implemented by virtualized functions instanced on a platform (e.g., a cloud platform).

### Zero-Power Consumption Terminal

With the development of wireless communication technology, integrating the wireless communication system with various vertical industries such as logistics, manufacturing, transportation, and energy has become a trend. For example, the wireless communication system may be integrated with an industrial wireless sensor network (IWSN). For another example, the wireless communication system may be integrated with smart logistics and smart warehousing. For yet another example, the wireless communication system may be integrated with a smart home network.

However, in these industries, a terminal often needs to have features such as low cost, a relatively small size (e.g., ultra-thin), maintenance-freeness, and long life. Therefore, to meet the above conditions, the zero-power consumption communication technology may be used for communication between a network device and a terminal. In this case, the terminal may also be referred to as a "zero-power consumption terminal".

Based on the energy source and usage mode of the zero-power consumption terminal, the zero-power consumption terminal may be classified into the following three types: a passive zero-power consumption terminal, a semi-passive zero-power consumption terminal, and an active zero-power consumption terminal. These are described respectively below.

### 1) Passive Zero-Power Consumption Terminal

The passive zero-power consumption terminal does not require a built-in battery. When the zero-power consumption terminal approaches a network device (e.g., a reader/writer in a radio frequency identification (RFID) system), the zero-power consumption terminal is within a near-field range formed by radiation of an antenna of the network device. Therefore, the antenna of the zero-power consumption terminal generates an induced current through electromagnetic induction, and the induced current drives a low-power consumption chip circuit of the zero-power consumption terminal. This achieves operations such as signal demodulation of a forward link and signal modulation of a backward link, etc. For a backscattering link, the zero-power consumption terminal performs a transmission for a signal in a backscattering implementation manner.

It can be seen that the passive zero-power consumption terminal does not require the built-in battery to drive either the forward link or the backward link, and is a true sense of zero-power consumption terminal.

The passive zero-power consumption terminal does not require a battery, and the radio frequency circuit and the baseband circuit are very simple. For example, the passive zero-power consumption terminal does not require devices such as a low noise amplifier (LNA), a power amplifier (PA), a crystal oscillator, or an analog-to-digital converter (ADC). Therefore, the passive zero-power consumption terminal has many advantages such as small size, light weight, very low price, and long service life.

### 2) Semi-Passive Zero-Power Consumption Terminal

The semi-passive zero-power consumption terminal itself may not be equipped with a conventional battery, but can use a radio frequency (RF) power harvesting module to harvest radio wave power, and simultaneously, store the harvested power in a power storage unit (e.g., a capacitor). After obtaining the power, the power storage unit may drive the low-power consumption chip circuit of the zero-power consumption terminal, thereby achieving operations such as signal demodulation of the forward link and signal modulation of the backward link. For the backscattering link, the zero-power consumption terminal performs a transmission for a signal in a backscattering implementation manner.

It can be seen that the semi-passive zero-power consumption terminal does not require the built-in battery to drive either the forward link or the backward link. Although the power stored in the capacitor is used during operation, the power is derived from the radio power harvested by the power harvesting module; therefore, the semi-passive zero-power consumption terminal is also a true sense of zero-power consumption terminal.

The semi-passive zero-power consumption terminal inherits many advantages of the passive zero-power consumption terminal, thereby having many advantages such as small size, light weight, very low price, and long service life.

### 3) Active Zero-Power Consumption Terminal

The zero-power consumption terminal used in some scenarios may also be an active zero-power consumption terminal. This type of terminal device may have a built-in battery. The battery may be used to drive the low-power consumption chip circuit of the zero-power consumption terminal, thereby achieving operations such as signal demodulation of the forward link and signal modulation of the backward link. However, for the backscattering link, the zero-power consumption terminal performs a transmission for a signal in a backscattering implementation manner. Therefore, the zero-power consumption of this type of terminal is mainly reflected in the fact that the signal transmission on the backward link does not require the terminal's own power, but instead uses the backscattering mode.

Since the active zero-power consumption terminal has the built-in battery for power supply, the battery may increase the communication distance of the zero-power consumption terminal and improve the communication reliability. Therefore, the active zero-power consumption terminal is applied in some scenarios with relatively high requirements for communication distance, read latency, etc.

As the application industries of the communication system (e.g., a 5G system) increase, the types of connected objects and application scenarios are becoming more diverse, which also leads to higher requirements for the price and power consumption of the communication terminal. The application of battery-free, low-cost passive Internet of Things devices has become a key technology of the cellular Internet of Things. Such devices can enrich the types and number of network-linked terminals, truly realizing the Internet of Everything. The passive Internet of Things device may be based on the existing zero-power consumption device and extended to be suitable for the cellular Internet of Things. That is, a cellular passive Internet of Things can be realized based on the passive Internet of Things device.

### AMP Terminal Device

In some communication systems (e.g., an NR system and a WiFi system), the battery-free and low-cost nature of devices can support the low-cost mass deployment and maintenance-freeness of devices such as Internet of Things (IoT) devices. At present, the related art is researching how to support an ambient power-based IoT device in a communication system. Such a terminal device may be referred to as an AMP terminal device, an ambient IoT device, or an AMP IoT device. The power required for the AMP terminal device to operate may be derived from ambient power harvesting. Sources of ambient power may include a wireless radio frequency signal, solar power, thermal power, mechanical power, etc. This type of device is similar to a passive or semi-passive device in zero-power consumption communication. The AMP terminal device harvests ambient power and stores the harvested ambient power in a power storage unit. After obtaining sufficient power, the power storage unit can drive a low-power consumption circuit to perform operations such as signal demodulation of a forward link, and signal modulation and sending of the backward link.

In a RAN of the 3GPP, a research project on the AMP terminal device has been carried out. The project roughly classifies the AMP terminal device into three types: a device A, a device B, and a device C. The three types of devices have corresponding complexities and communication capabilities, which are described respectively below.

The device A does not have a power storage capability and cannot perform sending of an independent signal. That is, the device A may use the backscattering transmission mode.

The device B has a power storage capability and cannot perform sending of an independent signal. That is, the device B may use the backscattering transmission mode and use the stored power to amplify the backscattering signal.

The device C has a power storage capability and can perform sending of an independent signal, i.e., having an active transmission capability.

It should be noted that the device A has the lowest complexity and power consumption, and the power consumption may be as low as 1µW. However, the communication distance of the device A is limited, which is generally only a few meters. The device A requires the network device to provide a carrier signal for backscattering transmission. The device C generally has a capacitor with a relatively large capacity to store power from the environment, with a power consumption that can support several hundred µW. The device C can support an active signal transmission, and has a relatively large communication distance. Since the device C can perform an active transmission, the device C does not require the network device to provide a carrier signal. The complexity and power consumption of the device B are between those of the device A and the device C.

### Random Access Procedure

FIG. 2 is an exemplary diagram of a terminal device performing a random access procedure. As illustrated in FIG. 2, the random access procedure may include four operations, i.e., S210 to S240.

In operation S210, the terminal device sends a random access preamble to a network device. The preamble may also be referred to as a message 1 (MSG1). The preamble may be included in a physical random access channel (PRACH).

In operation S220, after detecting that a terminal device has sent an access preamble, the network device sends a random access response (RAR) to the terminal device. The RAR may also be referred to as a message 2 (MSG2). The RAR may be used for one or more of: informing the terminal device of a physical uplink shared channel (PUSCH) resource that can be used when sending a message 3 (MSG3), allocating a temporary radio network temporary identity (RNTI) to the terminal device, and providing a time advance command to the terminal device, etc.

In operation S230, after receiving the RAR, the terminal device sends the MSG3 message on the PUSCH resource specified by the RAR message. The MSG3 carries terminal device-specific temporary identity information.

In operation S240, the network device sends a contention resolution message to the terminal device. The contention resolution message may be in a message 4 (MSG4). The MSG4 may further include an uplink transmission resource allocated to the terminal device.

Upon receiving the MSG4 sent by the network device, the terminal device may check whether the terminal device-specific temporary identity sent by the terminal device in the MSG3 is included in the contention resolution message sent by the network device. If the terminal device-specific temporary identity is included in the contention resolution message, the terminal device considers that the random access procedure succeeds; otherwise, it may consider that the random procedure fails, and the terminal device needs to initiate the random access procedure again from the first operation.

The present disclosure improves the random access procedure. FIG. 3 is a schematic flowchart of a wireless communication method provided by an embodiment of the present disclosure. The method illustrated in FIG. 3 may be performed by a terminal device and a network device. The method illustrated in FIG. 3 may include operation S310.

In operation S310, the terminal device receives first information sent by the network device.

The first information may be used to schedule first data to be sent by the terminal device during a random access procedure.

Since the first information may be used for scheduling, in some embodiments, the first information may also be referred to as scheduling information.

The first data may be uplink data sent by the terminal device to the network device. Exemplarily, the first data may be carried on a PUSCH.

In the related art, the terminal device needs to complete the random access procedure to establish an RRC connection with the network before data transmission can be performed. Therefore, the data transmission process in the related art is relatively complex and the power consumption is relatively high. Whereas in the present disclosure, based on the first information, the network device can schedule the terminal device to send data during the random access procedure, thereby simplifying the data sending process and further reducing the power consumption. In addition, through the first information, the network device can reasonably and efficiently schedule the uplink transmission of the terminal device during the random access procedure, thereby reducing collisions and improving the success rate of uplink transmission.

The terminal device of the present disclosure may be a terminal device with a relatively weak power storage capacity or a terminal device with relatively low power consumption. For example, the terminal device may include a zero-power consumption device or an AMP terminal device. The type of the AMP terminal device is not limited in the present disclosure. For example, the AMP terminal device may be a device A, a device B, or a device C.

For the AMP terminal device, the technical solution capable of reducing the power consumption provided by the present disclosure is particularly important to such type of terminal device. Taking an example in which the power harvesting mode is RF power harvesting, the AMP terminal device can harvest radio waves through an RF power harvesting module to obtain radio power and store the radio power in a power storage unit. After obtaining sufficient power, the power storage unit can drive a low-power consumption circuit to perform operations such as: signal demodulation of the forward link, and signal modulation and sending of the backward link. When having an uplink transmission requirement, the AMP terminal device needs to use the stored power for uplink transmission. Due to the limitation of the power harvesting efficiency and storage capacity of the AMP terminal device, it is necessary to reduce the power consumption of the AMP terminal device as much as possible. When the AMP terminal device needs to send data, sending the data to the network during the random access procedure can avoid the complex process in the related art in which the terminal device establishes an RRC connection with the network through the random access procedure before data transmission is performed. It can be understood that the technical solution provided by the present disclosure can simplify the communication process for the AMP terminal device, thereby reducing the power consumption of the AMP terminal device, so as to adapt to the capability characteristics of the AMP terminal device.

In addition, the mainstream services supported by AMP terminal devices are services of application type such as monitoring, sensing, and identification. Therefore, the AMP terminal device mainly involves services of small data amount. It is apparent that the random access procedure is suitable for transmitting small data amount; therefore, this solution is more suitable for the data transmission requirements of AMP. Therefore, the technical solution provided by the embodiments of the present disclosure can take into account the service characteristics of the AMP terminal device and better adapt to the data transmission requirements of the AMP terminal device.

The first information is described in detail below.

In some embodiments, the first information may be used to indicate one or more of following pieces of information of the first data: transmission resource allocation information, information related to a modulation coding scheme, information related to a rate, and power control information. These are described respectively below.

The transmission resource allocation information may be used to indicate a transmission resource allocated by the network device for the first data. The transmission resource may include one or more of: a frequency-domain resource, a time-domain resource, and a code-domain resource. In the case where the first information indicates the transmission resource allocation information, the first information may also be referred to as resource scheduling information.

Optionally, in a case where the terminal device operates at a target frequency-domain position and bandwidth, the transmission resource allocation information may indicate the time-domain resource of the first data. In this case, the time-domain resource of the first data may be determined based on the transmission resource allocation information, and the frequency-domain resource of the first data may be determined based on the target frequency-domain position and bandwidth at which the terminal device operates.

In some embodiments, during the operation process of some terminal devices, the target frequency-domain position and bandwidth may remain unchanged; that is, the terminal device may operate at a fixed frequency-domain position and bandwidth. Therefore, the target frequency-domain position and bandwidth may also be referred to as a fixed frequency-domain position and bandwidth. Conversely, during the operation process of some terminal devices, the frequency-domain position and bandwidth at which these terminal devices operate may change. For this case, it can be said that the terminal device is capable of operating at a variable frequency-domain position and bandwidth.

In some embodiments, the target frequency-domain position and bandwidth may be preset. The terminal device may determine a frequency-domain position and bandwidth it operates according to preset information. Therefore, the target frequency-domain position and bandwidth may also be referred to as a preset frequency-domain position and bandwidth.

Exemplarily, the terminal device may include an AMP terminal device. Since the complexity of the AMP terminal device is relatively low, the AMP terminal device may operate at a fixed frequency-domain position and bandwidth, or the AMP terminal device may operate at a preset frequency-domain position and bandwidth. In this case, resources used by different AMP terminal devices may be time-division resources, and the time-division resources may be indicated by the transmission resource allocation information.

Since the frequency-domain resource of the first data may be determined based on the target frequency-domain position and bandwidth at which the terminal device operates, the first information may not indicate the frequency-domain resource of the first data. For example, the first information may only indicate the time-domain resource of the first data and not indicate the frequency-domain resource of the first data. That is, the first information may only include an indication for the time-domain resource of the first data and not include an indication for the frequency-domain resource.

Therefore, it can be seen that in the case where the terminal device operates at the target frequency-domain position and bandwidth, the first information used for scheduling the first data may not indicate the frequency-domain resource of the first data, thereby reducing the information amount of the first information, so as to further reduce the communication resources occupied by the first information and simplify the communication process.

In some embodiments, the time-domain resource of the first data may belong to a first resource pool. In this case, the transmission resource allocation information may be used to indicate that a first time-domain resource in the first resource pool is the time-domain resource of the first data.

The first resource pool may satisfy the following: being preset, being broadcast via system information, or being indicated through a paging message.

Exemplarily, the first resource pool may include N time-domain resource units, where N may be a positive integer. Frequency-domain positions corresponding to the N time-domain resource units may be the same. The first time-domain resource may include one or more of the N time-domain resource units. That is, the transmission resource allocation information may be used to indicate one or more of the N time-domain resource units as the time-domain resource of the first data.

The indication method for the transmission resource allocation information is not limited in the present disclosure.

In some embodiments, the first information may indicate the transmission resource allocation information in an explicit manner. That is, the transmission resource allocation information may be indicated by value(s) of at least one field or information domain. For example, the transmission resource allocation information may include an index of the first time-domain resource in the first resource pool. For another example, the transmission resource allocation information may include an offset of the first time-domain resource in the first resource pool, where the offset may refer to a deviation between the first time-domain resource and a certain time-domain resource unit (e.g., the first time-domain resource unit) in the first resource pool.

In some embodiments, the first information may indicate the transmission resource allocation information in an implicit manner. For example, in a case where the first information is carried in a RAR message, the RAR message may carry preamble information. The RAR message may further include information of the first resource pool. There may be a correspondence relationship between the preamble information and a time-domain resource unit in the first resource pool. For example, first preamble information may correspond to the first time-domain resource in the first resource pool. By means of the first preamble information fed back through the RAR message, the information of the first time-domain resource may be determined.

In a case where the first resource pool only includes time-domain resources, the first resource pool may also be referred to as a time-domain resource pool.

It should be noted that a size of the time-domain resource of the first data may be related to one or more of following pieces of information: a modulation scheme of the terminal device, a data rate of the terminal device, an encoding scheme of the terminal device, a symbol length, and an amount of data that can be carried by a message carrying the first data.

FIG. 4 is a schematic diagram of a first resource pool provided by an embodiment of the present disclosure. In FIG. 4, a rectangle represents a time-domain resource unit. As illustrated in FIG. 4, the first resource pool includes 10 time-domain resource units. The indices or offsets of the 10 resource units are 0 to 9, respectively. The first time-domain resource may include any one or more of the 10 time-domain resource units. The first information may include an index or offset of a time-domain resource unit in the first resource pool, so as to indicate the time-domain resource of the first data.

Some terminal devices (e.g., AMP terminal devices with higher capabilities) may have a re-tuning capability, i.e., being capable of operating at multiple frequency-domain positions and bandwidths. For this type of terminal devices, the transmission resource allocation information may be used to indicate the frequency-domain resource of the first data.

In some embodiments, the frequency-domain resource of the first data may belong to a second resource pool. In this case, the transmission resource allocation information may be used to indicate a first frequency-domain resource in the second resource pool as the frequency-domain resource of the first data.

The second resource pool may satisfy the following: being preset, being broadcast via system information, or being indicated through a paging message.

The second resource pool may include M frequency-domain resource units, where M may be a positive integer. Frequency-domain positions and bandwidths corresponding to the M frequency-domain resource units may be different. The first frequency-domain resource may include one or more of the M frequency-domain resource units. That is, the transmission resource allocation information may be used to indicate one or more of the M frequency-domain resource units as the frequency-domain resource of the first data.

The indication method for the frequency-domain resource of the first data is not limited in the present disclosure.

As described above, the first information may indicate the transmission resource allocation information in an explicit manner. For example, the transmission resource allocation information may include an index of the first frequency-domain resource in the second resource pool. For another example, the transmission resource allocation information may include an offset of the first frequency-domain resource in the second resource pool, where the offset may refer to a deviation between the first frequency-domain resource and a certain frequency-domain resource unit (e.g., the first frequency-domain resource unit) in the second resource pool.

As described above, the first information may indicate the transmission resource allocation information in an implicit manner. For example, in a case where the first information is carried in a RAR message, the RAR message may carry preamble information. The RAR message may further include information of the second resource pool. There may be a correspondence relationship between the preamble information and a frequency-domain resource unit in the second resource pool. For example, first preamble information may correspond to the first frequency-domain resource in the second resource pool. By means of the first preamble information fed back through the RAR message, the information of the first frequency-domain resource may be determined.

In a case where the second resource pool only includes frequency-domain resources, the second resource pool may also be referred to as a frequency-domain resource pool.

In some embodiments, the first resource pool and the second resource pool may be the same resource pool. Taking an example in which the same resource pool is the second resource pool, both the time-domain resource and the frequency-domain resource of the first data may belong to the second resource pool. In this case, the transmission resource allocation information may be used to indicate a first resource in the second resource pool as a transmission resource of the first data. Here, the transmission resource allocation information not only indicates a frequency-domain resource corresponding to the first resource, but also indicates a time-domain resource corresponding to the first resource.

Exemplarily, the second resource pool may include P resource units, where P may be a positive integer. Frequency-domain positions and time-domain positions corresponding to the P resource units may not be completely the same or may be partially the same. The first resource may include one or more of the P resource units. That is, the transmission resource allocation information may be used to indicate one or more of the P resource units as the resource of the first data.

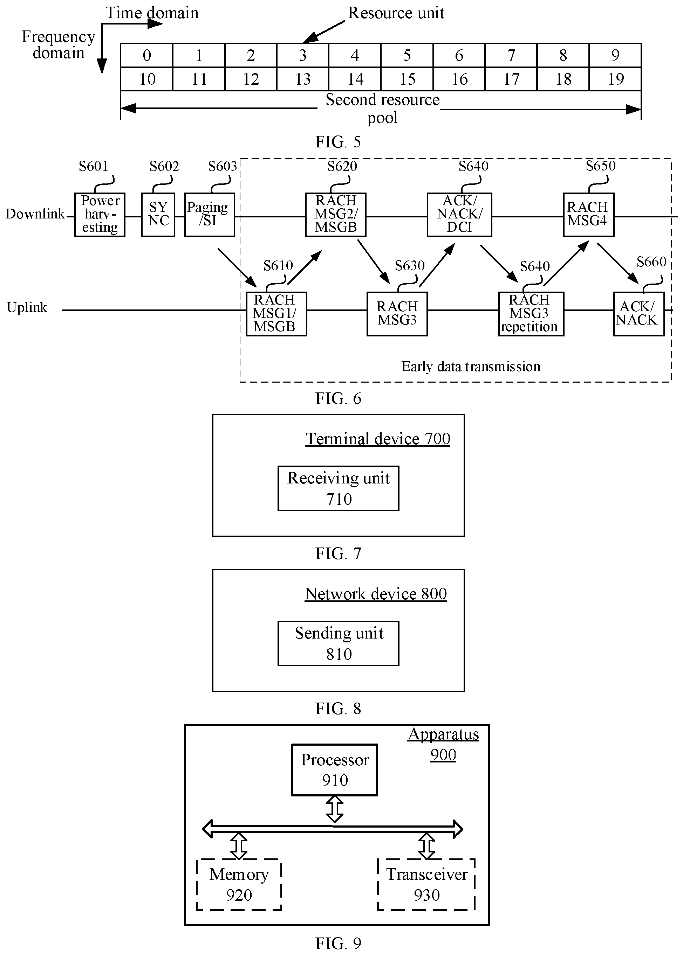

FIG. 5 is a schematic diagram of the second resource pool provided by an embodiment of the present disclosure. In FIG. 5, a rectangle represents a resource unit. Time-domain positions and frequency-domain positions corresponding to different resource units may each be different. As illustrated in FIG. 5, the second resource pool includes 20 resource units. The indices or offsets of the 20 resource units are 0 to 19, respectively. Frequency-domain resources corresponding to resource units 0 to 9 are different from frequency-domain resources corresponding to resource units 10 to 19. Time-domain resources corresponding to resource units 0 to 9 are different. Time-domain resources corresponding to resource units 10 to 19 are different. The first resource may include any one or more of the 20 resource units. The first information may include an index or offset of a resource unit in the second resource pool, so as to indicate a resource of the first data.

In some embodiments, the transmission resource allocation information may be used to indicate a code-domain resource. The code-domain resource may include a spreading sequence. The terminal device may adopt the spreading sequence used for sending the first data by means of spread spectrum. The spreading sequence may include one or more of: an m-sequence, a Gold sequence, and a Walsh sequence. Various types of spreading sequence are described below.

The m-sequence may be a sequence with a period of P=2ⁿ-1 generated by an n-stage linear shift register, where n may be a positive integer. The m-sequence may an abbreviation for a longest linear shift register sequence. The characteristic polynomial f(x) may be used to determine the feedback connection state of the n-stage linear shift register. The characteristic polynomial f(x) must be a primitive polynomial. The primitive polynomial needs to satisfy following conditions: f(x) is an irreducible polynomial (i.e., a polynomial that cannot be factored); f(x) may evenly divide x^{p}+1, where p=2ⁿ-1; and f(x) cannot evenly divide (x^{q}+1), where q<P. By cyclically shifting a basic m-sequence, multiple different m-sequences may be generated. M-sequences have good autocorrelation and relatively good cross-correlation properties.

The Gold sequence is constructed by the modulo-2 addition of a preferred pair of m-sequences, and a new Gold sequence may be obtained each time a cyclic shift of an m-sequence is changed. In this way, each group of a preferred pair of m-sequences may generate 2ⁿ+1 Gold sequences. The Gold sequences have relatively favorable autocorrelation and cross-correlation properties.

The Walsh code is derived from an H matrix. A Walsh matrix may be obtained by rearrangement according to the number of alternations between "+1' and "-1" in the H matrix. Various rows and columns in the matrix are mutually orthogonal to each other, thereby ensuring that the channels spread using these codes are also mutually orthogonal.

In some embodiments, the transmission resource allocation information may indicate the spreading sequence used for the first data. For example, one or more of the above-mentioned m-sequence, Gold sequence, or Walsh sequence may be sorted and numbered according to a certain rule, and the first information may indicate the serial number of the spreading sequence of the first data. Exemplarily, the first information may explicitly indicate the serial number. Optionally, the transmission resource allocation information may indicate the serial number of the spreading sequence of the first data through the value(s) of at least one field or information domain. For example, the transmission resource allocation information may include an index of a first code-domain resource.

In some embodiments, the code-domain resource of the first data may belong to a third resource pool. In this case, the transmission resource allocation information may be used to indicate the first code-domain resource in the third resource pool as the code-domain resource of the first data.

The third resource pool may satisfy the following: being preset, being broadcast via system information, or being indicated through a paging message.

The third resource pool may include Q code-domain resource units, where Q may be a positive integer. Frequency-domain positions and bandwidths corresponding to the Q code-domain resource units may be different. The first code-domain resource may include one or more of the Q code-domain resource units. That is, the transmission resource allocation information may be used to indicate one or more of the Q code-domain resource units as the code-domain resource of the first data.

The indication method for the code-domain resource of the first data is not limited in the present disclosure.

As described above, the first information may indicate the transmission resource allocation information in an explicit manner. For example, the transmission resource allocation information may include an index of the first code-domain resource in the third resource pool. For another example, the transmission resource allocation information may include an offset of the first code-domain resource in the third resource pool, where the offset may refer to a deviation between the first code-domain resource and a certain code-domain resource unit (e.g., the first code-domain resource unit) in the third resource pool.

As described above, the first information may indicate the transmission resource allocation information in an implicit manner. For example, in a case where the first information is carried in a RAR message, the RAR message may carry preamble information. The RAR message may further include information of the third resource pool. There may be a correspondence relationship between the preamble information and a code-domain resource unit in the third resource pool. For example, first preamble information may correspond to the first code-domain resource in the third resource pool. By means of the first preamble information fed back through the RAR message, the information of the first code-domain resource may be determined.

In a case where the third resource pool only includes code-domain resources, the third resource pool may also be referred to as a code-domain resource pool.

In some embodiments, the first resource pool and the third resource pool may be the same resource pool. Taking an example in which the same resource pool is the third resource pool, both the time-domain resource and the code-domain resource of the first data may belong to the third resource pool. In this case, the transmission resource allocation information may be used to indicate a first time-code domain resource in the third resource pool as the time-domain resource and code-domain resource of the first data.

Exemplarily, the third resource pool may include R time-code domain resource units, where R may be a positive integer. The first time-code domain resource may include one or more of the R time-code domain resource units. That is, the transmission resource allocation information may be used to indicate one or more of the R time-code domain resource units as the code-domain resource and frequency-domain resource of the first data.

In some embodiments, the first resource pool, the second resource pool, and the third resource pool may be the same resource pool. Taking an example in which the same resource pool is the third resource pool, the time-domain resource, frequency-domain resource, and code-domain resource of the first data may all belong to the third resource pool. In this case, the transmission resource allocation information may be used to indicate a first resource in the third resource pool as a transmission resource of the first data.

Exemplarily, the third resource pool may include T resource units, where T may be a positive integer. The first time-code domain resource may include one or more of the T resource units. That is, the transmission resource allocation information may be used to indicate one or more of the T units as the transmission resource of the first data.

Some terminal devices may support multiple modulation schemes and/or encoding schemes. In this case, the network device may indicate information related to a modulation coding scheme (MCS) through the first information, so that the terminal device determines a modulation scheme and/or an encoding scheme to be used for data transmission during the random access procedure.

The information related to the modulation coding scheme may include one or more of: a modulation scheme used for the first data, and an encoding scheme used for the first data.

The encoding scheme or modulation scheme used for the first data is not limited in the present disclosure. Optionally, the modulation scheme may include one of: on-off keying (OOK), frequency shift keying (FSK), and phase shift keying (PSK), etc. Optionally, the encoding scheme may include: non-return-to-zero inverted (NRZI) encoding, Manchester encoding, unipolar return-to-zero (RZ) encoding, differential binary phase (DBP) encoding, Miller encoding, or differential encoding.

The information related to the rate may include one or more of following pieces of information of the first data: a symbol length, a symbol rate, a bit rate, and a data rate. For example, the uplink transmission of some terminal devices may use different symbol lengths. Taking an example in which OKK is the scheduling manner, the terminal device may use multiple lengths of OKK symbols. In this case, the first information may indicate the length of the OKK symbol used by the terminal device for data transmission during the random access procedure.

The power control information may be used to indicate a power for the terminal device to send the first data. For example, for an AMP terminal device with an active transmission capability, the power control information may be used to adjust an uplink transmit power of the AMP terminal device. For another example, for an AMP terminal device that only supports a backscattering capability, the first information may not include the power control information.

In some embodiments, the terminal device may send second information to the network device. The second information may be related to information of the terminal device. The network device may schedule the data transmission of the terminal device during the random access procedure according to the information of the terminal device, i.e., achieving precise scheduling in a targeted manner according to the own situation of the terminal device.

In some embodiments, in response to receiving the second information sent by the terminal device, the network device may send the first information to the terminal device to schedule the first data. It can be seen that the second information may be used to request the network device to schedule the data transmission of the terminal device during the random access procedure. Based on this, the second information may also be referred to as scheduling request information.

Optionally, the second information may be related to one or more of following pieces of information: first capability information supported by the terminal device, an amount of data to be transmitted by the terminal device, and channel quality information between the terminal device and the network device. These are described respectively below.

The first capability information may include one or more of following capabilities supported by the terminal device: a modulation scheme, an encoding scheme, rate information, a power storage capability, and a capability related to operating frequency.

As described above, the terminal device may support one or more modulation schemes. Through the first capability information, the terminal device may indicate the one or more modulation schemes supported by the terminal device, thereby facilitating the network device in determining the modulation scheme for data transmission during the random result procedure, and indicating the terminal device to transmit the first data through the modulation scheme.

As described above, the terminal device may support one or more encoding schemes. Through the first capability information, the terminal device may indicate the one or more encoding schemes supported by the terminal device, thereby facilitating the network device in determining the encoding scheme during the random access procedure, and indicating the terminal device to transmit the first data through the encoding scheme.

The rate information may include one or more of following rates supported by the terminal device: a symbol rate, a bit rate, and a data rate, etc.

The power storage capability may include one or more of: whether the terminal device has a power storage capability, and an amount of power the terminal device can store, etc. Alternatively, the power storage capability may be indicated by a device type. Different device types may correspond to different power storage capabilities. The device type may include the above-mentioned device A, device B, and device C.

The capability related to the operating frequency domain may be used to indicate a frequency domain or bandwidth at which the terminal device operates. For example, the capability related to the operating frequency domain may indicate: that the terminal device operates at a target frequency-domain position and bandwidth, or that the terminal device is capable of operating at a variable frequency-domain position or bandwidth. For another example, the capability related to the operating frequency domain may indicate information of the target frequency-domain position and bandwidth at which the terminal device operates.

The amount of data to be transmitted by the terminal device may refer to the amount of data the terminal device needs to transmit during the random access procedure. By obtaining the amount of uplink data to be transmitted by the terminal device through the second information, the network device may schedule a suitable size of transmission resources.

The channel quality information between the terminal device and the network device may include one or more of following pieces of information that reflect channel quality: a coverage level of the network device, downlink signal measurement quality, and a path loss, etc. Among them, the coverage level may indicate one or more of: a specific location of the terminal device within a coverage range of the network device, and whether the terminal device is within coverage ranges of multiple network devices, etc. The downlink channel measurement quality may be represented by one or more of: a reference signal received power (RSRP), reference signal received quality (RSRQ), and a received signal strength indicator (RSSI).

In some embodiments, the second information may be indicated by a first preamble. The first preamble may be a preamble in the random access procedure (i.e., the MSG1).

Optionally, the second information may be indicated by the first preamble in an explicit manner. That is, the first preamble may include one or more information domains to indicate the second information.

Optionally, the second information may be indicated by the first preamble in an implicit manner.

For example, the preambles may be divided into multiple groups, and the multiple groups may correspond to different second information. The group to which the first preamble belongs may indicate the second information. The network device may obtain the corresponding second information by means of the detected group of the preamble.

For another example, in a case where the second information is used to indicate the target frequency-domain position at which the terminal device operates, the target frequency-domain position may be determined by a frequency-domain position where the first preamble is transmitted. For example, the target frequency-domain position at which the terminal device operates may be the same as the frequency-domain position where the first preamble is transmitted. Alternatively, there may be a correspondence relationship between the target frequency-domain position at which the terminal device operates and the frequency-domain position where the first preamble is transmitted. The correspondence relationship may be configured by the network device or pre-defined. For example, the correspondence relationship may include: that there is a first offset before the target frequency-domain position at which the terminal device operates and the frequency-domain position where the first preamble is transmitted. The first offset may be configured by the network device or pre-defined.

In some embodiments, the first information may be carried in a RAR message. That is, the first information may be carried in an MSG2.

In some embodiments, the first data may be carried in an MSG3. That is, the terminal device may send uplink data to the network device via the MSG3 in the random access procedure. For the case where the first information is carried in the MSG2, the MSG2 may schedule a data transmission of the MSG3.

Exemplarily, the terminal device may send an MSG1 to request the network device to schedule the first data to be sent by the terminal device during the random access procedure. Based on the request by the MSG1, the network device may send an MSG2 containing the first information to the terminal device, to schedule the first data to be sent by the terminal device during the random access procedure. According to the received MSG2, the terminal device may transmit the first data via the MSG3. One or more pieces of information, such as the transmission resource, the encoding scheme, the modulation scheme, the rate, and the transmit power of the first data, may be determined based on an indication of the first information.

In some embodiments, sending of the first data may be in response to the terminal receiving first trigger information. The first trigger information may be used to trigger the terminal device to send the first data. The first trigger information may be carried in a paging message and/or a system message. The system message may also be referred to as a system information (SI) message.

For example, the terminal device may receive the first trigger information sent by the network device. In response to receiving the first trigger information, the terminal device may send a first preamble (i.e., an MSG1) to the network device. That is, the first trigger information may be used to trigger the random access procedure of the terminal device. This random access procedure may be used to transmit uplink data (i.e., the first data). The first preamble may be used to request the network device to schedule a transmission of the terminal device during the random access procedure. In response to receiving the first preamble, the network device may send the first information to the terminal device, thereby scheduling an uplink data transmission in the random access procedure.

For ease of understanding, the technical solutions provided in the present disclosure are described in detail below by taking FIG. 6 as an example.

The method illustrated in FIG. 6 may be performed by a terminal device and a network device. The terminal device may be, for example, an AMP terminal device (e.g., a tag). A link from the network device to the terminal device is a downlink as illustrated in FIG. 6, and a link from the terminal device to the network device is an uplink as illustrated in FIG. 6.

The method illustrated in FIG. 6 may include operation S610 to operation S660.

In operation S610, the terminal device selects a RACH and sends an MSG1 (i.e., a preamble) to the network device.

Before operation S610, the method illustrated in FIG. 6 may further include one or more of operation S601 to operation S603.

In operation S601, the terminal device performs power harvesting (energy harvesting).

In operation S602, the terminal device completes synchronization (SYNC) with the network.

In operation S603, the network device sends a system message or a paging message to the terminal device.

The system message or the paging message in operation S603 may be used to control a random access by the terminal device. The RACH selected by the terminal device in operation S610 may be determined based on a RACH resource indicated by the system message or the paging message. For example, the network device may periodically send the paging message to control the random access by an AMP, thereby controlling the AMP terminal device to periodically report data to the network device. The system message or the paging message may also be used to configure a first resource pool and/or a second resource pool.

Taking a logistics and warehousing scenario as an example, a large number of commodities need to be transferred, stored, loaded, unloaded, and inventoried at a logistics station or warehouse; and the logistics station needs to read identification information of the AMP terminal device through the network device. In this scenario, the network device requires the AMP terminal device to periodically perform a random access, so as to transmit the identification information of the AMP terminal device during the random access procedure.

In operation S620, the network device sends an MSG2 to the terminal device.

The MSG2 may indicate scheduling information (i.e., first information) for MSG3 PUSCH corresponding to a detected preamble.

In operation S630, according to the scheduling information indicated by the MSG2, the terminal device sends first data (e.g., identification information) to the network device via an MSG3.

In operation S650 and operation S660, the network device sends an acknowledgment/negative acknowledgment (ACK/NACK) feedback for the identification information sent by the terminal device, and responds to the reception result of MSG3 via an MSG4 to achieve the contention resolution procedure. For a terminal device that has successfully sent the first data to the network device, the terminal device can initiate the random access procedure again.

The method embodiments of the present disclosure are described in detail above. The apparatus embodiments of the present disclosure are described in detail below. It should be understood that the description of the method embodiments corresponds to the description of the apparatus embodiments; therefore, for parts not described in detail, please refer to the above method embodiments.

FIG. 7 is a schematic structural diagram of a terminal device 700 provided in an embodiment of the present disclosure. The terminal device 700 includes a receiving unit 710.

The receiving unit 710 is configured to receive first information sent by a network device, where the first information is used to schedule first data to be sent by the terminal device during a random access procedure.

In some embodiments, the first information is used to indicate one or more of following pieces of information of the first data: transmission resource allocation information; information related to a modulation coding scheme; information related to a rate; and power control information.

In some embodiments, in a case where the terminal device operates at a target frequency-domain position and bandwidth, the transmission resource allocation information indicates a time-domain resource of the first data, and a frequency-domain resource of the first data is determined based on the target frequency-domain position and bandwidth.

In some embodiments, the transmission resource allocation information is used to indicate one or more of: a first time-domain resource in a first resource pool as a time-domain resource of the first data; a first frequency-domain resource in a second resource pool as a frequency-domain resource of the first data; and a first code-domain resource in a third resource pool as a code-domain resource of the first data.

In some embodiments, one or more of the first resource pool, the second resource pool, and the third resource pool satisfy the following: being broadcast via a system message, and/or being indicated via a paging message. In some embodiments, the information related to the modulation coding scheme includes one or more of: a modulation scheme used for the first data; and an encoding scheme used for the first data.

In some embodiments, the encoding scheme includes: non-return-to-zero inverted (NRZI) encoding, Manchester encoding, unipolar return-to-zero (RZ) encoding, differential binary phase encoding, Miller encoding, or differential encoding.

In some embodiments, the information related to the rate includes one or more of following pieces of information of the first data: a symbol length, a symbol rate, a bit rate, and a data rate.

In some embodiments, the power control information is used to indicate a power for the terminal device to send the first data.

In some embodiments, the terminal device 700 is further configured to: send second information to the network device, where the second information is related to one or more of following pieces of information: first capability information supported by the terminal device, where the first capability information is related to a data transmission capability of the terminal device; an amount of data to be transmitted by the terminal device; and channel quality information between the terminal device and the network device.

In some embodiments, the first capability information includes one or more of following capabilities supported by the terminal device: a modulation scheme, encoding information, rate information, a power storage capability, and a capability related to operating frequency domain.

In some embodiments, the channel quality information includes one or more of following pieces of information: a coverage level of the network device, downlink signal measurement quality, and a path loss.

In some embodiments, the second information is indicated by a first preamble.

In some embodiments, a group to which the first preamble belongs is used to indicate the second information.

In some embodiments, the first information is carried in a random access response message.

In some embodiments, the first data is carried in a Msg 3 of the random access procedure.

In some embodiments, the terminal device is further configured to: receive first trigger information sent by the network device, where the first trigger information is used to trigger the terminal device to send the first data; and send the first preamble to the network device in response to receiving the first trigger information; where receiving the first information sent by the network device includes: receiving the first information sent by the network device in response to sending the first preamble.

In some embodiments, the first trigger message is carried in a paging message and/or a system message.

In some embodiments, the terminal device is an AMP terminal device.

In an optional embodiment, the receiving unit 710 may be a transceiver 930. The terminal device 700 may further include a processor 910 and a memory 920, as specifically illustrated in FIG. 9.

FIG. 8 is a schematic structural diagram of a network device 800 provided in an embodiment of the present disclosure. The network device 800 includes a sending unit 810.

The sending unit 810 is configured to send first information to a terminal device, where the first information is used to schedule first data to be sent by the terminal device during a random access procedure.

In some embodiments, the first information is used to indicate one or more of following pieces of information of the first data: transmission resource allocation information; information related to a modulation coding scheme; information related to a rate; and power control information.

In some embodiments, in a case where the terminal device operates at a target frequency-domain position and bandwidth, the transmission resource allocation information indicates a time-domain resource of the first data, and a frequency-domain resource of the first data is determined based on the target frequency-domain position and bandwidth.

In some embodiments, the transmission resource allocation information is used to indicate one or more of: a first time-domain resource in a first resource pool as a time-domain resource of the first data; a first frequency-domain resource in a second resource pool as a frequency-domain resource of the first data; and a first code-domain resource in a third resource pool is a code-domain resource of the first data.

In some embodiments, one or more of the first resource pool, the second resource pool, and the third resource pool satisfy the following: being broadcast via a system message, and/or being indicated via a paging message.

In some embodiments, the information related to the modulation coding scheme includes one or more of: a modulation scheme used for the first data; and an encoding scheme used for the first data.

In some embodiments, the encoding scheme includes: non-return-to-zero inverted encoding, Manchester encoding, unipolar return-to-zero encoding, differential binary phase encoding, Miller encoding, or differential encoding.

In some embodiments, the information related to the rate includes one or more of following pieces of information of the first data: a symbol length, a symbol rate, a bit rate, and a data rate.

In some embodiments, the power control information is used to indicate a power for the terminal device to send the first data.

In some embodiments, the network device 800 is further configured to: receive second information sent by the terminal device, where the second information is related to one or more of following pieces of information: first capability information supported by the terminal device, where the first capability information is related to a data transmission capability of the terminal device; an amount of data to be transmitted by the terminal device; and channel quality information between the terminal device and the network device.

In some embodiments, the first capability information includes one or more of following capabilities supported by the terminal device: a modulation scheme, encoding information, rate information, a power storage capability, and a capability related to operating frequency domain.

In some embodiments, the channel quality information includes one or more of following pieces of information: a coverage level of the network device, downlink signal measurement quality, and a path loss.

In some embodiments, the second information is indicated by a first preamble.

In some embodiments, a group to which the first preamble belongs is used to indicate the second information.

In some embodiments, the first information is carried in a random access response message.

In some embodiments, the first data is carried in a Msg 3 of the random access procedure.

In some embodiments, the network device is further configured to: send first trigger information to the terminal device, where the first trigger information is used to trigger the terminal device to send the first data; and receive a first preamble sent by the terminal device in response to sending the first trigger information; where sending the first information to the terminal device includes: sending the first information to the terminal device in response to receiving the first preamble.

In some embodiments, the first trigger message is carried in a paging message and/or a system message.

In some embodiments, the terminal device is an AMP terminal device.

In an optional embodiment, the sending unit 810 may be a transceiver 930. The network device 800 may further include a processor 910 and a memory 920, as specifically illustrated in FIG. 9.

FIG. 9 is a schematic diagram of an apparatus for communication according to the embodiments of the present disclosure. The dashed lines in FIG. 9 indicate that a unit or module is optional. An apparatus 900 may be used to implement the method described in the above method embodiments. The apparatus 900 may be a chip, a terminal device or a network device.

The apparatus 900 may include one or more processors 910. The processor 910 may support the apparatus 900 to implement the method described in the above method embodiments. The processor 910 may be a general-purpose processor or a dedicated-purpose processor. For example, the processor may be a central processing unit (CPU). Alternatively, the processor may be other general-purpose processors, a digital signal processor (DSP), an application specific integrated circuit (ASIC), a field programmable gate array (FPGA) or other programmable logic devices, discrete gates or transistor logic devices, discrete hardware components, etc. The general-purpose processor may be a microprocessor, or the processor may be any conventional processor or the like.

The apparatus 900 may further include one or more memories 920. The memory 920 has stored a program thereon, and the program may be executed by the processor 910, to enable the processor 910 to perform the method in the above method embodiments of the present disclosure. The memory 920 may be independent of the processor 910, or may be integrated into the processor 910.

The apparatus 900 may further include a transceiver 930. The processor 910 may communicate with other devices or chips via the transceiver 930. For example, the processor 910 may transmit and receive data with other devices or chips via the transceiver 930.

The embodiments of the present disclosure further provide a computer-readable storage medium for storing a program. The computer-readable storage medium may be applied to the terminal or the network device provided in the embodiments of the present disclosure, and the program enables a computer to perform the method performed by the terminal or the network device in various embodiments of the present disclosure.

The embodiments of the present disclosure further provide a computer program product. The computer program product includes a program. The computer program product may be applied to the terminal or the network device provided in the embodiments of the present disclosure, and the program enables a computer to perform the method performed by the terminal or the network device in various embodiments of the present disclosure.

The embodiments of the present disclosure further provide a computer program. The computer program may be applied to the terminal or the network device provided in the embodiments of the present disclosure, and the computer program enables a computer to perform the method performed by the terminal or the network device in various embodiments of the present disclosure.

It should be understood that the terms "system" and "network" may be used interchangeably in the present disclosure. In addition, the terms used in the present disclosure are only used to explain the specific embodiments of the present disclosure and are not intended to limit the present disclosure. The terms "first," "second," "third," "fourth" and the like in the specification, claims and drawings of the present disclosure are used to distinguish different objects rather than to describe a specific order. In addition, the terms "includes/comprises," "has," and any variations thereof, are intended to cover a non-exclusive inclusion.

In the embodiments of the present disclosure, the term "indicate/indicated/indicating/indication" mentioned may be a direct indication, may also be an indirect indication, or may mean that there is an association relationship. For example, A indicating B may mean that A directly indicates B, for example, B may be obtained by A; alternatively, A indicating B may mean that A indirectly indicates B, for example, A indicates C, and B may be obtained by C; alternatively, A indicating B may mean that there is an association relationship between A and B.

In the embodiments of the present disclosure, "B corresponding to A" means that B is associated with A, and B can be determined based on A. However, it should also be understood that determining B based on A does not mean determining B based solely based on A. B may also be determined based on A and/or other information.

In the embodiments of the present disclosure, the term "correspond/corresponding/correspondence" may mean that there is a direct or indirect correspondence between two elements, may also mean that there is an associated relationship between the two elements, or may also mean a relationship of indicating and being indicated or a relationship of configuring and being configured, etc.

In the embodiments of the present disclosure, "pre-defined" or "pre-configured" may be implemented by pre-saving corresponding codes, tables or other manners that may be used to indicate related information in devices (e.g., including a terminal device and a network device), and a specific implementation manner thereof is not limited in the present disclosure. For example, the pre-defined may refer to what is defined in a protocol.

In the embodiments of the present disclosure, the "protocol" may refer to a standard protocol in the communication field. For example, the "protocol" may include an LTE protocol, an NR protocol, and a related protocol used in a future communication system, which is not limited in the present disclosure.

In the embodiments of the present disclosure, the term "and/or" herein is only an association relationship to describe associated objects, which indicates that there may be three kinds of relationships. For example, "A and/or B" may mean three cases where: A exists alone, both A and B exist, and B exists alone. In addition, a character "/" herein generally means that associated objects before and after "/" are in an "or" relationship.

In the embodiments of the present application, the term "comprise/include" may refer to direct inclusion or indirect inclusion. Optionally, the term "comprise/include" mentioned in the embodiments of the present application may be replaced with "indicate" or "used to determine". For example, "A comprises B" may be replaced with "A indicates B" or "A is used to determine B".

In various embodiments of the present disclosure, values of serial numbers of the processes do not mean the order of execution. The execution order of each process should be determined by its function and internal logic, and should not constitute any limitation on the implementation process of the embodiments of the present disclosure.

In several embodiments provided in the present disclosure, it should be understood that the disclosed systems, apparatuses, and methods may be implemented in other manners. For example, the apparatus embodiments described above are merely exemplary. For example, a division of units is merely a division based on a logical function and there may be other division manners in actual implementations. For example, multiple units or components may be combined or integrated into another system, or some characteristics may be omitted or not be performed. In addition, coupling, direct coupling or communication connection between each other displayed or discussed may be indirect coupling or communication connection via some interfaces, apparatuses or units, which may be electrical, mechanical or in other forms.

The units described as separate components may be or may not be physically separated, and the components displayed as units may be or may not be physical units. That is, they may be located in a place or distributed over multiple network units. Some or all of the units may be selected according to actual needs to achieve the purpose of the solutions of the embodiments.

In addition, various function units in various embodiments of the present disclosure may be integrated into one processing unit, or various units may exist physically separately, or two or more units may be integrated into one unit.

All or some of the above embodiments may be implemented by software, hardware, firmware or any combination thereof. When implemented using software, all or some of the embodiments may be implemented in the form of a computer program product. The computer program product includes one or more computer instructions. When the computer program instructions are loaded and executed on a computer, all or some of procedures or functions described in the embodiments of the present disclosure are generated. The computer may be a general-purpose computer, a dedicated-purpose computer, a computer network, or other programmable apparatus. The computer instructions may be stored in a computer-readable storage medium, or transmitted from one computer-readable storage medium to another computer-readable storage medium. For example, the computer instructions may be transmitted from one website, computer, server, or data center to another website, computer, server, or data center via a wired manner (e.g., a coaxial cable, an optical fiber, a digital subscriber line (DSL)) or a wireless manner (e.g., an infrared or radio manner, microwave, etc.). The computer-readable storage medium may be any available medium that may be read by a computer or a data storage device such as a server or a data center that integrates one or more available medium. The available medium may be a magnetic medium (e.g., a floppy disk, a hard disk, a magnetic tape), an optical medium (e.g., digital versatile disc (a digital video disc, DVD)), or a semiconductor medium (e.g., a solid state disk (SSD)).

The above description is only specific implementations of the present disclosure, but the protection scope of the present disclosure is not limited thereto. Any change or substitution that would be readily conceived by a person skilled in the art shall fall within the protection scope of the present application, provided that such change or substitution remains within the technical scope disclosed in the present disclosure. Therefore, the protection scope of the present disclosure shall be subject to the protection scope of the claims.

## Claims

1. A wireless communication method, comprising:
receiving, by a terminal device, first information sent by a network device;
wherein the first information is used to schedule first data to be sent by the terminal device during a random access procedure.

2. The method according to claim 1, wherein the first information is used to indicate one or more of following pieces of information of the first data:
transmission resource allocation information;
information related to a modulation coding scheme;
information related to a rate; and
power control information.

3. The method according to claim 2, wherein in a case where the terminal device operates at a target frequency-domain position and bandwidth, the transmission resource allocation information indicates a time-domain resource of the first data, and a frequency-domain resource of the first data is determined based on the target frequency-domain position and bandwidth.

4. The method according to claim 2 or 3, wherein the transmission resource allocation information is used to indicate one or more of:
a first time-domain resource in a first resource pool as a time-domain resource of the first data;
a first frequency-domain resource in a second resource pool as a frequency-domain resource of the first data; and
a first code-domain resource in a third resource pool as a code-domain resource of the first data.

5. The method according to claim 4, wherein
one or more of the first resource pool, the second resource pool, and the third resource pool satisfy the following: being broadcast via a system message, and/or being indicated via a paging message.

6. The method according to any one of claims 2 to 5, wherein the information related to the modulation coding scheme comprises one or more of: a modulation scheme used for the first data; and an encoding scheme used for the first data.

7. The method according to claim 6, wherein the encoding scheme comprises: non-return-to-zero inverted encoding, Manchester encoding, unipolar return-to-zero (RZ) encoding, differential binary phase encoding, Miller encoding, or differential encoding.

8. The method according to any one of claims 2 to 7, wherein the information related to the rate comprises one or more of following pieces of information of the first data: a symbol length, a symbol rate, a bit rate, and a data rate.

9. The method according to any one of claims 2 to 8, wherein the power control information is used to indicate a power for the terminal device to send the first data.

10. The method according to any one of claims 1 to 9, further comprising:
sending, by the terminal device, second information to the network device;
wherein the second information is related to one or more of following pieces of information:
first capability information supported by the terminal device, the first capability information being related to a data transmission capability of the terminal device;
an amount of data to be transmitted by the terminal device; and
channel quality information between the terminal device and the network device.

11. The method according to claim 10, wherein the first capability information comprises one or more of following capabilities supported by the terminal device: a modulation scheme, encoding information, rate information, a power storage capability, and a capability related to operating frequency domain.

12. The method according to claim 10 or 11, wherein the channel quality information comprises one or more of following pieces of information: a coverage level of the network device, downlink signal measurement quality, and a path loss.

13. The method according to any one of claims 10 to 12, wherein the second information is indicated by a first preamble.

14. The method according to claim 13, wherein a group to which the first preamble belongs is used to indicate the second information.

15. The method according to any one of claims 1 to 14, wherein the first information is carried in a random access response message.

16. The method according to any one of claims 1 to 15, wherein the first data is carried in a message 3 of the random access procedure.

17. The method according to any one of claims 1 to 16, further comprising:
receiving, by the terminal device, first trigger information sent by the network device, the first trigger information being used to trigger the terminal device to send the first data; and
sending, by the terminal device, a first preamble to the network device in response to receiving the first trigger information;
wherein receiving, by the terminal device, the first information sent by the network device comprises:
receiving, by the terminal device, the first information sent by the network device in response to sending the first preamble.

18. The method according to claim 17, wherein the first trigger message is carried in a paging message and/or a system message.

19. The method according to any one of claims 1 to 18, wherein the terminal device is an ambient power enabled (AMP) terminal device.

20. A wireless communication method, comprising:
sending, by a network device, first information to a terminal device;
wherein the first information is used to schedule first data to be sent by the terminal device during a random access procedure.

21. The method according to claim 20, wherein the first information is used to indicate one or more of following pieces of information of the first data:
transmission resource allocation information;
information related to a modulation coding scheme;
information related to a rate; and
power control information.

22. The method according to claim 21, wherein in a case where the terminal device operates at a target frequency-domain position and bandwidth, the transmission resource allocation information indicates a time-domain resource of the first data, and a frequency-domain resource of the first data is determined based on the target frequency-domain position and bandwidth.

23. The method according to claim 21 or 22, wherein the transmission resource allocation information is used to indicate one or more of:
a first time-domain resource in a first resource pool as a time-domain resource of the first data;
a first frequency-domain resource in a second resource pool as a frequency-domain resource of the first data; and
a first code-domain resource in a third resource pool as a code-domain resource of the first data.

24. The method according to claim 23, wherein
one or more of the first resource pool, the second resource pool, and the third resource pool satisfy the following: being broadcast via a system message, and/or being indicated via a paging message.

25. The method according to any one of claims 21 to 24, wherein the information related to the modulation coding scheme comprises one or more of: a modulation scheme used for the first data; and an encoding scheme used for the first data.

26. The method according to claim 25, wherein the encoding scheme comprises: non-return-to-zero inverted encoding, Manchester encoding, unipolar return-to-zero (RZ) encoding, differential binary phase encoding, Miller encoding, or differential encoding.

27. The method according to any one of claims 21 to 26, wherein the information related to the rate comprises one or more of following pieces of information of the first data: a symbol length, a symbol rate, a bit rate, and a data rate.

28. The method according to any one of claims 21 to 27, wherein the power control information is used to indicate a power for the terminal device to send the first data.

29. The method according to any one of claims 20 to 28, further comprising:
receiving, by the network device, second information sent by the terminal device;
wherein the second information is related to one or more of following pieces of information:
first capability information supported by the terminal device, the first capability information being related to a data transmission capability of the terminal device;
an amount of data to be transmitted by the terminal device; and
channel quality information between the terminal device and the network device.

30. The method according to claim 29, wherein the first capability information comprises one or more of following capabilities supported by the terminal device: a modulation scheme, encoding information, rate information, a power storage capability, and a capability related to operating frequency domain.

31. The method according to claim 29 or 30, wherein the channel quality information comprises one or more of following pieces of information: a coverage level of the network device, downlink signal measurement quality, and a path loss.

32. The method according to any one of claims 29 to 31, wherein the second information is indicated by a first preamble.

33. The method according to claim 32, wherein a group to which the first preamble belongs is used to indicate the second information.

34. The method according to any one of claims 20 to 33, wherein the first information is carried in a random access response message.

35. The method according to any one of claims 20 to 34, wherein the first data is carried in a message 3 of the random access procedure.

36. The method according to any one of claims 20 to 35, further comprising:
sending, by the network device, first trigger information to the terminal device, the first trigger information being used to trigger the terminal device to send the first data; and
receiving, by the network device, a first preamble sent by the terminal device in response to sending the first trigger information;
wherein sending, by the network device, the first information to the terminal device comprises:
sending, by the network device, the first information to the terminal device in response to receiving the first preamble.

37. The method according to claim 36, wherein the first trigger message is carried in a paging message and/or a system message.

38. The method according to any one of claims 20 to 37, wherein the terminal device is an ambient power enabled (AMP) terminal device.

39. A terminal device, comprising:
a receiving unit, configured to receive first information sent by a network device;
wherein the first information is used to schedule first data to be sent by the terminal device during a random access procedure.

40. The terminal device according to claim 39, wherein the first information is used to indicate one or more of following pieces of information of the first data:
transmission resource allocation information;
information related to a modulation coding scheme;
information related to a rate; and
power control information.

41. The terminal device according to claim 40, wherein in a case where the terminal device operates at a target frequency-domain position and bandwidth, the transmission resource allocation information indicates a time-domain resource of the first data, and a frequency-domain resource of the first data is determined based on the target frequency-domain position and bandwidth.

42. The terminal device according to claim 40 or 41, wherein the transmission resource allocation information is used to indicate one or more of:
a first time-domain resource in a first resource pool as a time-domain resource of the first data;
a first frequency-domain resource in a second resource pool as a frequency-domain resource of the first data; and
a first code-domain resource in a third resource pool as a code-domain resource of the first data.

43. The terminal device according to claim 42, wherein
one or more of the first resource pool, the second resource pool, and the third resource pool satisfy the following: being broadcast via a system message, and/or being indicated via a paging message.

44. The terminal device according to any one of claims 40 to 43, wherein the information related to the modulation coding scheme comprises one or more of: a modulation scheme used for the first data; and an encoding scheme used for the first data.

45. The terminal device according to claim 44, wherein the encoding scheme comprises: non-return-to-zero inverted encoding, Manchester encoding, unipolar return-to-zero (RZ) encoding, differential binary phase encoding, Miller encoding, or differential encoding.

46. The terminal device according to any one of claims 40 to 45, wherein the information related to the rate comprises one or more of following pieces of information of the first data: a symbol length, a symbol rate, a bit rate, and a data rate.

47. The terminal device according to any one of claims 40 to 46, wherein the power control information is used to indicate a power for the terminal device to send the first data.

48. The terminal device according to any one of claims 39 to 47, wherein the terminal device is further configured to:
send second information to the network device;
wherein the second information is related to one or more of following pieces of information:
first capability information supported by the terminal device, the first capability information being related to a data transmission capability of the terminal device;
an amount of data to be transmitted by the terminal device; and
channel quality information between the terminal device and the network device.

49. The terminal device according to claim 48, wherein the first capability information comprises one or more of following capabilities supported by the terminal device: a modulation scheme, encoding information, rate information, a power storage capability, and a capability related to operating frequency domain.

50. The terminal device according to claim 48 or 49, wherein the channel quality information comprises one or more of following pieces of information: a coverage level of the network device, downlink signal measurement quality, and a path loss.

51. The terminal device according to any one of claims 48 to 50, wherein the second information is indicated by a first preamble.

52. The terminal device according to claim 51, wherein a group to which the first preamble belongs is used to indicate the second information.

53. The terminal device according to any one of claims 39 to 52, wherein the first information is carried in a random access response message.

54. The terminal device according to any one of claims 39 to 53, wherein the first data is carried in a message 3 of the random access procedure.

55. The terminal device according to any one of claims 39 to 54, wherein the terminal device is further configured to:
receive first trigger information sent by the network device, the first trigger information being used to trigger the terminal device to send the first data; and
send a first preamble to the network device in response to receiving the first trigger information;
wherein receiving the first information sent by the network device comprises:
receiving the first information sent by the network device in response to sending the first preamble.

56. The terminal device according to claim 55, wherein the first trigger message is carried in a paging message and/or a system message.

57. The terminal device according to any one of claims 39 to 56, wherein the terminal device is an ambient power enabled (AMP) terminal device.

58. A network device, comprising:
a sending unit, configured to send first information to a terminal device;
wherein the first information is used to schedule first data to be sent by the terminal device during a random access procedure.

59. The network device according to claim 58, wherein the first information is used to indicate one or more of following pieces of information of the first data:
transmission resource allocation information;
information related to a modulation coding scheme;
information related to a rate; and
power control information.

60. The network device according to claim 59, wherein in a case where the terminal device operates at a target frequency-domain position and bandwidth, the transmission resource allocation information indicates a time-domain resource of the first data, and a frequency-domain resource of the first data is determined based on the target frequency-domain position and bandwidth.

61. The network device according to claim 59 or 60, wherein the transmission resource allocation information is used to indicate one or more of:
a first time-domain resource in a first resource pool as a time-domain resource of the first data;
a first frequency-domain resource in a second resource pool as a frequency-domain resource of the first data; and
a first code-domain resource in a third resource pool as a code-domain resource of the first data.

62. The network device according to claim 61, wherein
one or more of the first resource pool, the second resource pool, and the third resource pool satisfy the following: being broadcast via a system message, and/or being indicated via a paging message.

63. The network device according to any one of claims 59 to 62, wherein the information related to the modulation coding scheme comprises one or more of: a modulation scheme used for the first data; and an encoding scheme used for the first data.

64. The network device according to claim 63, wherein the encoding scheme comprises: non-return-to-zero inverted encoding, Manchester encoding, unipolar return-to-zero (RZ) encoding, differential binary phase encoding, Miller encoding, or differential encoding.

65. The method according to any one of claims 59 to 64, wherein the information related to the rate comprises one or more of following pieces of information of the first data: a symbol length, a symbol rate, a bit rate, and a data rate.

66. The network device according to any one of claims 59 to 65, wherein the power control information is used to indicate a power for the terminal device to send the first data.

67. The network device according to any one of claims 58 to 66, wherein the network device is further configured to:
receive second information sent by the terminal device;
wherein the second information is related to one or more of following pieces of information:
first capability information supported by the terminal device, the first capability information being related to a data transmission capability of the terminal device;
an amount of data to be transmitted by the terminal device; and
channel quality information between the terminal device and the network device.

68. The network device according to claim 67, wherein the first capability information comprises one or more of following capabilities supported by the terminal device: a modulation scheme, encoding information, rate information, a power storage capability, and a capability related to operating frequency domain.

69. The network device according to claim 67 or 68, wherein the channel quality information comprises one or more of following pieces of information: a coverage level of the network device, downlink signal measurement quality, and a path loss.

70. The network device according to any one of claims 67 to 69, wherein the second information is indicated by a first preamble.

71. The network device according to claim 70, wherein a group to which the first preamble belongs is used to indicate the second information.

72. The network device according to any one of claims 58 to 71, wherein the first information is carried in a random access response message.

73. The network device according to any one of claims 58 to 72, wherein the first data is carried in a message 3 of the random access procedure.

74. The network device according to any one of claims 58 to 73, wherein the network device is further configured to:
send first trigger information to the terminal device, the first trigger information being used to trigger the terminal device to send the first data; and
receive a first preamble sent by the terminal device in response to sending the first trigger information;
wherein sending the first information to the terminal device comprises:
sending the first information to the terminal device in response to receiving the first preamble.

75. The network device according to claim 74, wherein the first trigger message is carried in a paging message and/or a system message.

76. The network device according to any one of claims 58 to 75, wherein the terminal device is an ambient power enabled (AMP) terminal device.

77. A terminal device, comprising: a memory and a processor, wherein the memory is configured to store a program, and the processor is configured to invoke the program in the memory to enable the terminal device to perform the method according to any one of claims 1 to 19.

78. A network device, comprising: a memory and a processor, wherein the memory is configured to store a program, and the processor is configured to invoke the program in the memory to enable the network device to perform the method according to any one of claims 20 to 38.

79. An apparatus, comprising: a processor configured to invoke a program from a memory to enable the apparatus to perform the method according to any one of claims 1 to 38.

80. A chip, comprising: a processor, configured to invoke a program from a memory to enable a device equipped with the chip to perform the method according to any one of claims 1 to 38.

81. A computer-readable storage medium, having stored a program thereon, wherein the program enables a computer to perform the method according to any one of claims 1 to 38.

82. A computer program product, comprising a program, wherein the program enables a computer to perform the method according to any one of claims 1 to 38.

83. A computer program, wherein the computer program enables a computer to perform the method according to any one of claims 1 to 38.
